# EUROPEAN PATENT APPLICATION

(11) **EP 1 895 454 A1**
(43) Date of publication of application: **05.03.2008**
(21) Application number: 06018319.1
(22) Date of filing: 01.09.2006
(51) Int. Cl.: G06Q 10/00

(54) **Business process and system with integrated network quality of service management**

(71) Applicant: SIEMENS AKTIENGESELLSCHAFT, 80333 München (DE)
(72) Inventor: Grimminger, Jochen, 80638 München (DE); Mityagin, Dmitry, 12353 Berlin (DE)

(57) **Abstract**

A computer system comprising a plurality of clients connected to a network, at least one UDDI repository connected to said network, at least one BPEL engine connected to said network, at least one quality of service proxy connected to said network, at least one webservice provider connected to said network, wherein the BPEL engine maps application quality-of-service parameters to network quality-of-service parameters and forwards these network quality-of-service parameters to said quality-of-service proxy which performs an automatic reservation of resources of said network depending on the forwarded network quality-of-service parameters.

## Description

### BACKGROUND OF THE INVENTION

The invention relates to a business process with an integrated network quality of service management and to a quality-of-service proxy for supporting quality-of-service of a business process.

Webservices are designed to automate e-business on a data network, such as the Internet. A webservice is a service available via the Internet that conducts transactions. Distributed computer systems enhance information sharing, mobile communication and e-business. Distributed computer systems can be used to perform financial transactions, automate purchase order or to automate multimedia content delivery.

Webservices are designed to enable easy platforms and system-independent machines to machine communications. In a service-oriented architecture (SOA) applications make use of services available in a network, such as the world wide web. Service-oriented architecture is a way of sharing functions, typically business functions, in a wide-spread and flexible way.

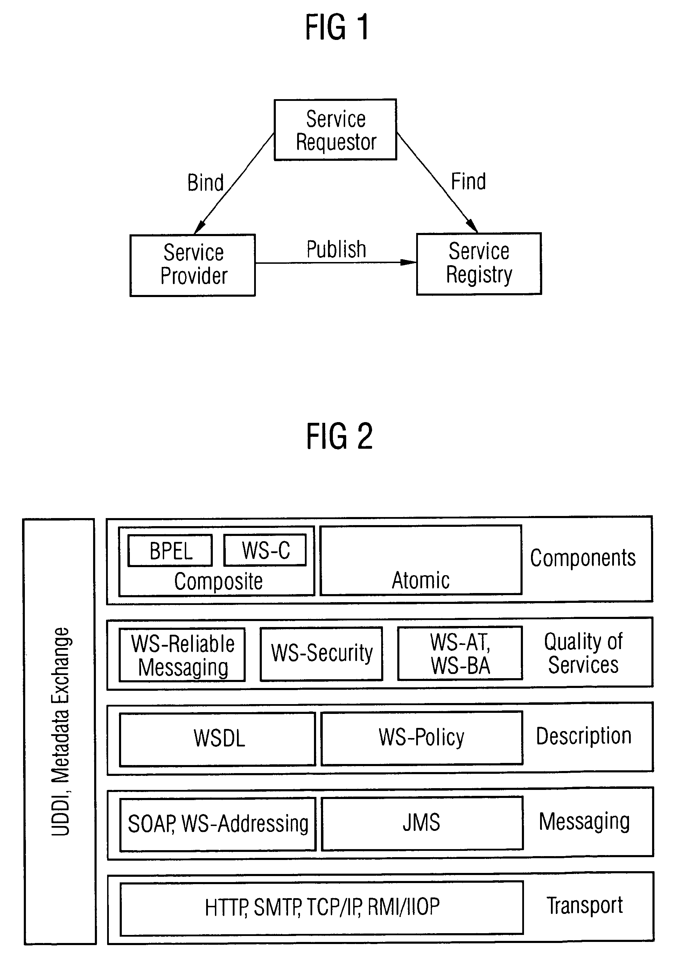

Figure 1 is a diagram for illustrating the basic principle of a service-oriented architecture (SOA) according to the state of the art. A service provider offers a service including details to allow any user who intends to use the service to bind to it in an appropriate way. The service provider publishes the detailed information about the service functionalities and how the service can be accessed in order to make it available to a potential service user. This is information is, for instance, represented in a form of meta data and published to a directory or a registry.

A service registry works like a service broker. The service registry offers the interfaces to an available service provider to publish the service description information along with additional business data. On the other hand, the service registry offers discovery facilities and appropriate interfaces such that a service requestor can find services that he is interested in and to select these services. The directory can be a universal description and discovery integration directory (UDDI).

A service requestor who wishes to discover and use a service offered by a service provider finds the appropriate service by surfing through the service registry. Based on the access information published about the service, the service requestor can bind to the selected service. The main advantages of a service-oriented architecture (SOA) are usability, interoperability, scalability, flexibility and cost efficiency. Developers can take code developed for existing business applications, expose it as webservices and then reuse it to meet new business requirements. Further, a service-oriented architecture SOA allows operability, i. e. clients of services can communicate and understand each other no matter what platform they run on. Because services in a service-oriented architecture are loosely coupled, an application that uses said services can be scaled easily and is more flexible. A webservice based on service-oriented architecture results in less costly solutions because the integration of client services do not require in-depth analysis and an unique code to customize solutions.

A webservice is a software system designed to support interoperable machine-to-machine interaction over a network. A webservice has an interface described in a machine processable format, such as the webservice description language (WSDL). Other systems interact with the webservice in a manner predescribed as description using simple object protocol (SOAP) messages typically using HTTP and XML in conjunction with other web related standards.

Figure 2 illustrates a webservice stack including the current standards and emerging standards for webservices.

The bottom layer of the webservice stack presents various transport protocols supporting the communication between a service and a requestor. A messaging layer on top of the transport layer provides the capabilities to handle messages of different types, wherein SOAP and WS addressing present the support of XML based messaging and JMS presents non-XML messaging. A description layer on top of the messaging layer uses WDSL to support and deal with functional service description and binding mechanisms. The WS policy of the description layer describes a quality-of-service function. The quality of service delivered and supported by the webservice architecture itself resides in the next layer, i. e. in the quality-of-service layer. This layer deals with security aspects, such as integrity and confidentiality of messages. The quality-of-service layer provides a WS reliable messaging with a reliable transport of messages and supports various kinds of transactions. In order to support coordination (orchestration) of services for a business process composed from several services, the webservice architecture as shown in figure 2 uses a component layer residing on top of the webservice stack. One of the standards widely accepted nowadays is BPEL (Business Process Execution Language). The webservice stack includes a further layer which provides discovery of the services and the description for a service requestor.

XML (Extendable Mark-up Language) provides the common syntax for webservices and defines a universal format for the representation and transmission of structure data in a manner that is independent of any particular hardware, software, file system, calculating or programming language. XML is defined using an unicode that allows to represent a content from many languages. The main functions of XML are interapplication communication, data integration and external application communication with outside partners.

For webservice messaging, the simple object access protocol SOAP is used with an XML based protocol representing the fundamental messaging framework for webservices. With SOAP, it is possible to exchange structured and typed information between webservices in a distributed environment. A SOAP message consists of an SOAP envelope which contains an mandatory SOAP body and optionally further SOAP headers.

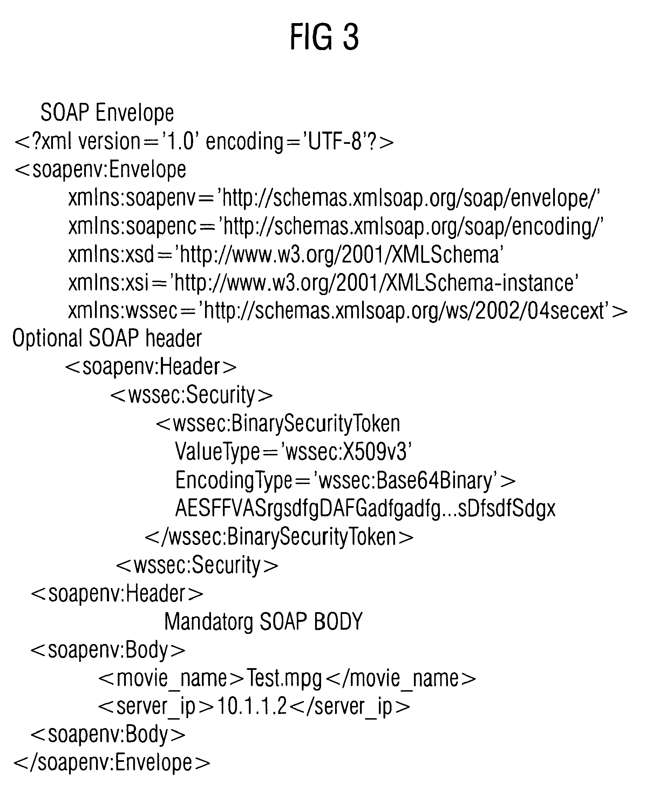

Figure 3 shows an example for a SOAP message according to the state of the art. The SOAP envelope specifies an XML namespace and an encoding style. The XML namespace specifies names that can be used in the SOAP message. The encoding style identifies data types recognized by the SOAP message. The optional headers within a SOAP envelope permit the extension of the SOAP message in a modular way. Typically, the SOAP header is used to convey security related information to be processed by runtime components.

The SOAP body contains the main part of the SOAP message. The SOAP body includes necessary application specific information and is intended for the ultimate receiver of the remote service implementation. The body of a SOAP message contains business application integration data and can form a service request or the input data for a requested service.

The quality-of-service QOS refers to the capability of a network for providing required services to the selected network traffic over various technologies, including asynchronous transfer mode (ATM), Ethernet and 802.1 IEEE networks, Sonet and IP-related networks that may use any or all of these underlying technologies. Dedicated bandwidth, control jitter and latency required by some realtime and interactive traffic along with improved loss characteristics are the main quality-of-service parameters.

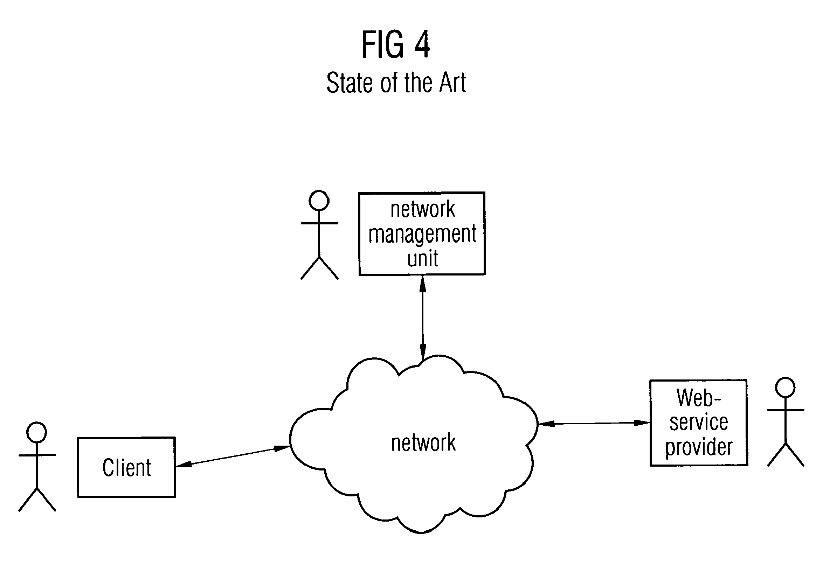

Figure 4 shows a conventional network for providing webservices according to the state of the art. To the network, such as the Internet, a plurality of clients and several webservice providers are connected. The network management unit of the network provider controls the resources of the data network. To receive a service with desired quality-of-service parameters, such as receiving a video/audio data stream from a service provider, the client first has to communicate with the webservice provider. For instance, the client has to inquire the application quality-of-service parameters from the webservice provider by calling the webservice provider or by sending an e-mail to the webservice provider. The application quality-of-service parameters comprise, for instance, a bit rate, a data format and a frame rate of a video/audio data stream. If the client is satisfied with the offered application quality-of-service parameters of the webservice provider, he may send a request to the webservice provider to send a video/audio data stream with best effort. A best effort network service with FIFO scheduling may lead to such effects as delay, delay jitter and packet drop, with the result that the quality of the data stream is degraded. In such a situation, the client has now to contact the network provider and explain to him the specific problem that he wishes the fulfilment of the specific application quality-of-service parameters. The network service provider will translate the demanded application quality-of-service parameters of the client according to his experiences into specific network quality-of-service parameters and offers the client to purchase a data channel having the specific network quality-of-service parameters, such as bandwidth, delay, error rate and delay jitter. If the client accepts the network provider will reconfigure the data network by means of his network management unit to set up the data channel purchased by the client. The purchased data channel forms a permanent reservation of resources of the data network of the network provider so that the network does no longer form a shared resource to many different clients.

The service providing procedure as outlined above, is very time consuming and uncomfortable for the client. The client has to contact the webservice provider and in case of transmission problems also the network provider to get a data channel having the desired quality-of-service. Furthermore, to set up such a data channel, the intervention of humans in order to negotiate SLA (Server Level Agreements) between the clients and the quality-of-service providers is necessary. According to the outcome of these negotations, the network provider and the webservice provider have to reconfigure their own infrastructure in order to meet the contracted service level agreement SLA with the client. A configuration of the network components by the network provider is not dynamic and leads to a permanent reconfiguration of the network resources so that the resources of the network can no longer be shared with other clients. Consequently, this reservation mechanism of resources of the network to the client is not optimal. Since the reconfiguration of the network resources is not done automatically but manually according to the contracted service level agreement SLA of the client, this conventional procedure is very time consuming and expensive for both, the network service provider and the webservice provider. A further disadvantage of the non-automatical reconfiguration of the network resources is that the reconfiguration takes a long time so that the client may have to wait for several weeks to receive the desired webservice with the required quality-of-service.

### BRIEF SUMMARY OF THE INVENTION

It is an object of the present invention to provide a business process and a system with an integrated network quality-of-service management which allows an automatic and dynamic configuration of network resources to provide services to a client fulfilling quality of service requested by the client.

The invention provides a business process with an integrated network quality-of-service management,
wherein said business process maps application quality-of-service parameters to network quality-of-service parameters and forwards the network quality-of-service parameters to a quality-of-service proxy which reserves resources of a network depending on the network quality-of-service parameters.

In one embodiment of the business process according to the present invention, the business process is performed by a BPEL (Business Process Execution Language) engine.

In a further embodiment of the business process according to the present invention, the business process receives the application quality-of-service parameters from a webservice provider.

In one embodiment of the business process according to the present invention, the business process receives the application quality-of-service parameters from a client.

In one embodiment of the business process according to the present invention, the business process receives the application quality of service parameters from a UDDI (Universal Description and Discovery Integration) repository.

In one embodiment of the business process according to the present invention, the application quality of service parameters comprise a transmission rate, a delay time, a delay jitter and an error rate.

In one embodiment of the business process according to the present invention, the network quality-of-service parameters comprise a bandwidth, a packet delay time, a packet delay jitter and a packet loss.

In one embodiment of the business process according to the present invention, the application quality-of-service parameters are received by a business process in a SOAP (Simple Object Access Protocol) message.

In one embodiment of the business process according to the present invention, the application quality-of-service parameters are received in a header of a SOAP message.

In an alternative embodiment of the business process according to the present invention, the application quality-of-service parameters are received by said business process in a body of a SOAP message.

In a further embodiment of the business process according to the present invention, the quality-of-service proxy after a successful reservation of the network resources transmits a confirmation message to the BPEL engine on which a business process is performed.

In a further embodiment of the business process according to the present invention, the BPEL engine transmits upon reception of the confirmation message from the quality-of-service proxy a start message to a webservice provider to start data transmission to a client.

In a further embodiment of the business process according to the present invention, the quality-of-service proxy server notifies a BPEL engine when the available network resources are not sufficient for performing the reservation of network resources.

In a further embodiment of the business process according to the present invention, the business process is a computer implemented process.

In an embodiment of the business process according to the present invention, the quality-of-service proxy reserves the resources of the network automatically depending on the network quality-of-service parameters.

In one embodiment of the business process according to the present invention, the client sends a request message indicating the desired data to the BPEL engine.

In one embodiment of the business process according to the present invention, the BPEL engine sends an inquiry message to an UDDI repository to retrieve addresses of webservice providers supplying the desired data.

In one embodiment of the business process according to the present invention, the BPEL engine sends an inquiry message to the addresses of the retrieved webservice providers to retrieve application quality-of-service parameters provided by said webservice providers.

In one embodiment of the business process according to the present invention, the client sends with his request message indicating desired data additional quality-of-service parameters to the BPEL engine.

In one embodiment of the business process according to the present invention, the request message sent by the client to the BPEL engine, further comprises price information data.

In one embodiment of the business process according to the present invention, the application quality-of-service parameters are published by a webservice provider in a UDDI repository.

In one embodiment of the business process according to the present invention, the webservice provider transmits multimedia data to a requesting client after reception of a start message from the BPEL engine via the network.

In one embodiment of the business process according to the present invention, the BPEL engine monitors all messages transmitted via the network.

In an embodiment of the business process according to the present invention, the BPEL engine sends a release message to release reserved network resources to the quality-of-service proxy when the data transmission from the webservice provider to the client has ended.

The invention further provides a data storage medium which stores a program code for performing the business process according to the present invention.

The invention further provides a quality-of-service proxy comprising a webservice interface for receiving network quality-of-service parameters from a BPEL (Business Process Execution Language) engine; and
a network interface for reserving resources of a network depending on the received network quality-of-service parameters.

The invention further provides a BPEL (Business Process Execution Language) engine running a business process with an integrated network quality-of-service management,
wherein the BPEL engine receives application quality-of-service parameters which are mapped to network quality-of-service parameters by a mapping unit of said BPEL engine, and
wherein the network quality of service parameters are forwarded by the BPEL engine to a quality-of-service proxy to a network service provider.

The invention further provides a computer system comprising
a plurality of clients connected to a network,
at least one UDDI repository connected to said network,
at least one BPEL engine connected to said network,
at least one quality-of-service proxy connected to said network,
at least one webservice provider connected to said network, wherein the BPEL engine maps application quality-of-service network parameters to a network quality-of-service parameters and forwards these network quality-of-service parameters to said quality of service proxy which performs an automatic reservation of resources of said network depending on the forwarded network quality-of-service parameters.

### BRIEF DESCRIPTION OF THE SEVERAL VIEWS OF THE DRAWINGS

The invention will be described in greater detail herein after, by way of non-limiting examples, with reference to the embodiments shown in the drawings.
Figure 1 shows a diagram for illustrating a service-oriented architecture according to the state of the art;
figure 2 shows a webservice protocol stack according to the state of the art;
figure 3 shows an example of a conventional SOAP message;
figure 4 shows a diagram of a conventional data network;
figure 5 shows a diagram of a computer system according to one embodiment of the present invention;
figures 6A-6C show further diagrams for illustrating an embodiment of the computer system according to the present invention;
figure 7 shows a block diagram for illustrating an embodiment of the computer system according to the present invention;
figure 8 shows a signal diagram for illustrating a possible embodiment of the business process according to the present invention;
figure 9 shows a diagram for illustrating the mapping of application quality-of-service parameters to a network quality-of-service parameter as performed by the business process according to the present invention;
figures 10A-10D show architectures for implementing a business process according to the present invention;
figure 11 shows a sequence diagram of a video streaming process as an example for the business process according to the present invention;
figure 12 shows a diagram for illustrating a video streaming process with a network quality-of-service as an example for the business process according to the present invention.

### DETAILED DESCRIPTION OF THE FIGURES

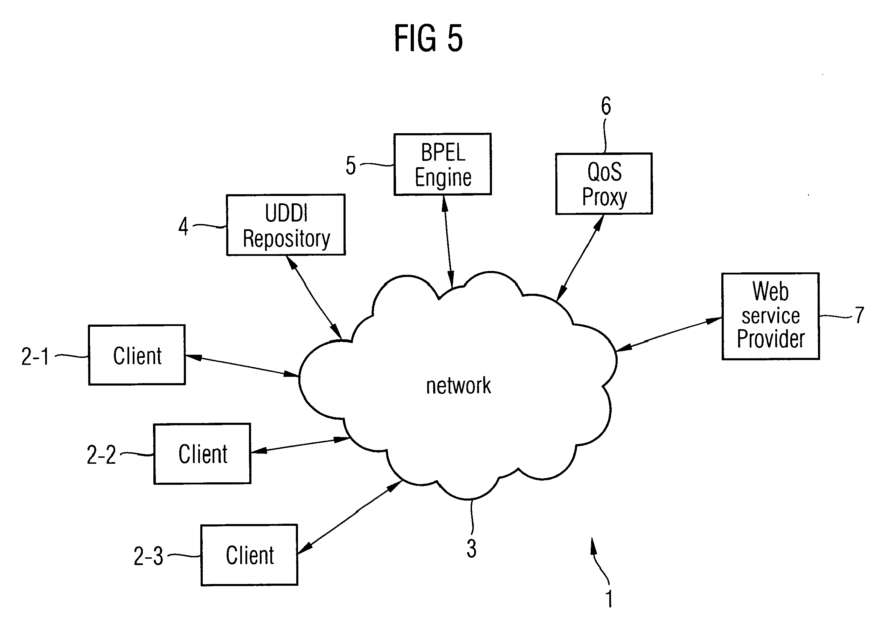

Figure 5 shows an embodiment of a computer system 1 according to the present invention implementing a business process with an integrated network quality-of-service management. The computer system 1 comprises a plurality of clients 2, such as computers of users which are connected to a common data network 3. The data network 3 may be any network, such as the Internet or an enterprise network, such as an local area network. To the network 3 an UDDI repository 4 is connected. The UDDI repository 4 provides a registry for services to make them available for the clients 2. The main function of the UDDI repository is the representation of data and meta data about webservices. The UDDI repository or registry 4 forms a standard based mechanism to classify, catalog and manage webservices so that they can be discovered and used by applications.

As can be seen from figure 5, a BPEL engine 5 is connected to the network 3. The BPEL engine 5 runs a BPEL (Business Process Execution Language) process. The BPEL process specifies an exact order in which participating webservices are invoked, sequentially or in parallel. BPEL allows expression of conditional behaviours of a business process. For instance, an invocation of a webservice can depend on the value of a previous invocation of another webservice. The definition of a business process with BPEL enables to construct loops, declare variables, copy and assign values and to define fault-handlers. With these constructions, it is possible to define complex business processes in an algorithmic manner. In a typical scenario of a BPEL process it receives a request and then executes the request by invoking webservices. The BPEL process running on the BPEL engine 5 has to communicate with other webservices using the WSDL description of the webservices. BPEL enables the decoupling of the business logic from the available service end points allowing the business process to be more adaptive and more portable.

As can be seen from figure 5, the computer system according to one embodiment of the present invention comprises a quality-of-service proxy 6. The quality-of-service proxy 6 according to the present invention comprises at least two interfaces, i. e. a webservice interface for receiving network quality-of-service parameters from the BPEL engine 5 and a network interface for reserving resources of a network 3 depending on the received network quality-of-service parameters.

Further, as can be seen from figure 5, at least one webservice provider 7 is connected to the network 3.

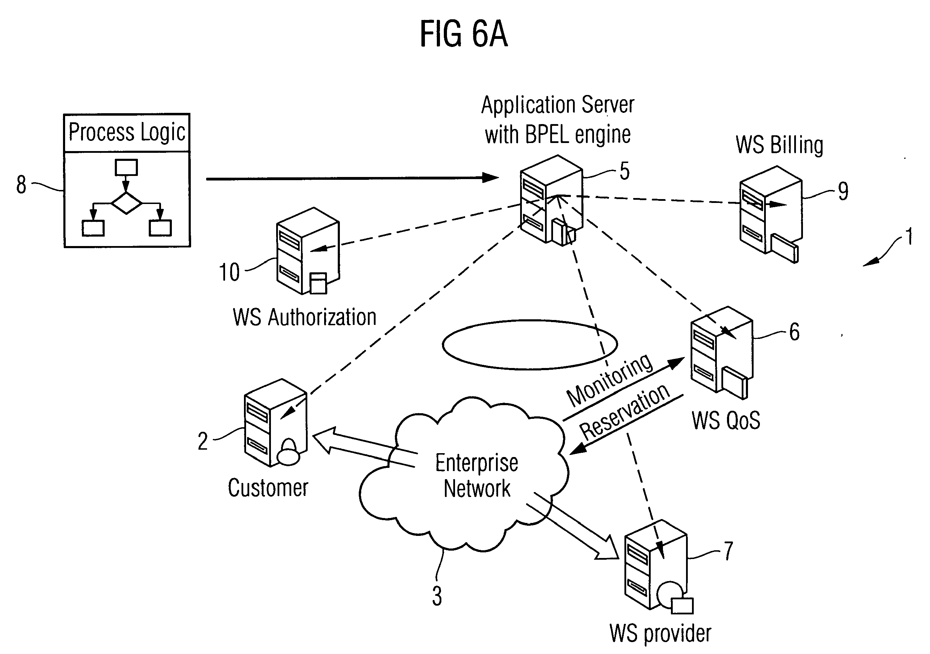

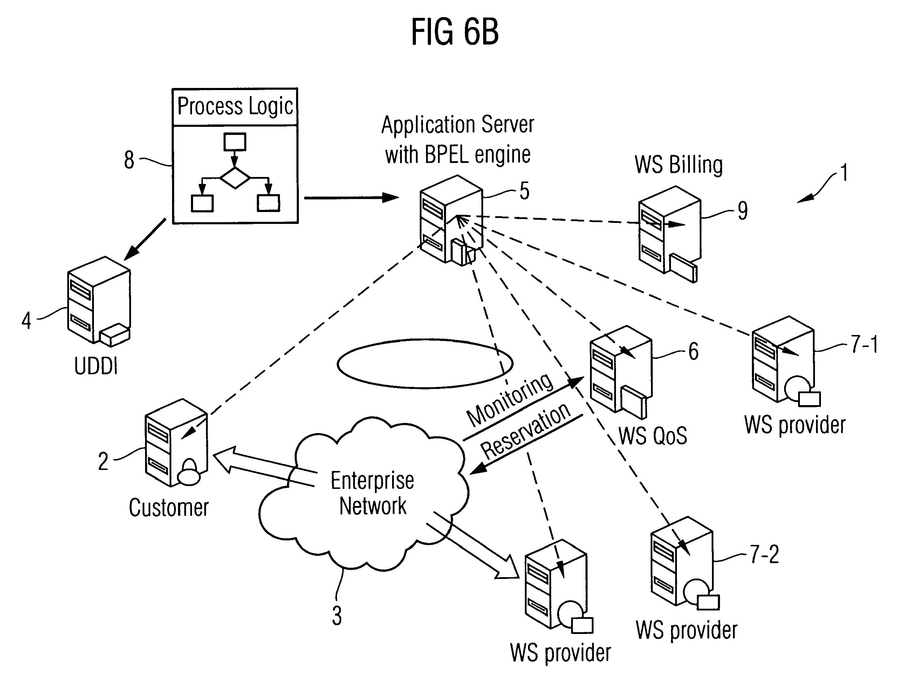

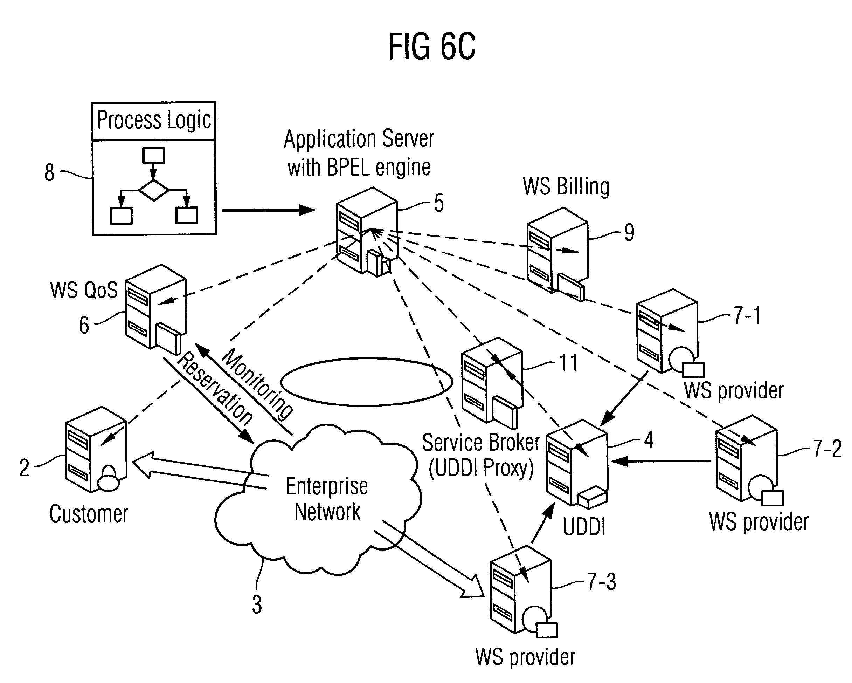

Figure 6 shows a simplified architecture of a computer system 1 according to the present invention wherein a quality-of-service integration into a business process is performed.

When the business process is performed by a static business process, no service discovery takes place as shown in the embodiment of figure 6A. In the architecture as shown in figure 6A, all participants in the business process are set before the initiation of the business process along with its work flow. A work flow definition 8 describing the business process is loaded into the BPEL engine and is executed therein. The work flow definition is a formal description of the activity (also called task) to be executed within the business process. The work flow definition serves on one side as an abstracted description of the business process for documentation purposes and on the other side as a model for computer-aided execution based on a work flow management system.

If the business process is static as shown in the embodiment of figure 6A, no service discovery takes place since there is no need to discover partners. The partners of the process are predefined. The only dynamic partners in such a scenario are clients or end users. A BPEL engine 5 executes the work flow definition, i. e. the BPEL business process. The BPEL engine 5 coordinates the actions of all partners within the business process. The webservice quality-of-service proxy 6 integrates the network quality-of-service management into the business process. The quality-of-service proxy 6 has two interfaces. The first interface is formed in a preferred embodiment by a WSDL interface that makes quality-of-service accessible to the application layer. The other interface is specified for interactions with lower network layers in order to perform necessary resource reservation for specific sessions as well as monitoring available network resources.

The computer system 1 according to the present invention as shown in figure 6A, uses the concept of a generic client or customer which implies that a client 2 requesting a service is determined during the execution of the business process.

The webservice provider 7 can offer services with different quality classes. Accordingly, the amount of network resources required varies significantly.

In the embodiment as shown in figure 6A, the webservice billing server 9 is in charge of counting and billing functions according to the requested service quality.

Furthermore, a webservice authorisation server 10 verifies the right of a client 2 to access specific services. The server 10 can also be provided to divide customers 2 into different classes which allows providers to offer different service classes.

Figure 6B shows a further embodiment of the computer system 1 according to the present invention, wherein the quality-of-service based service discovery is performed at the design time of the system. In order to make the business process more flexible and to enable the consumers to choose an appropriate service, the set of partners can be specified by the designer of the business process during the creation of the business process. The UDDI repository 4 comprises an UDDI directory containing information about all services. It includes the description of the functionalities offered by a service, information with which the webservice can be found, e. g. a URL and how the service can be accessed, i. e. a link to a WSDL interface. Each webservice provider 7 has to publish its own service in the UDDI directory 4 to make it accessible for consumers 2. The quality-of-service offered by the services can be published as well. On the webservice invoked by a business process during the running time, the webservice provider cannot be replaced until the business process has finished.

In the embodiment of figure 6B, the designer of the BPEL process can choose appropriate partners using the so-called UDDI browser according to the desired quality of service and type of service. In this case, a work flow of a business process can have alternative paths of execution which depend on the partner which will be invoked during the execution of the business process.

The BPEL engine 5 invokes depending on the customer service requirements and availability the most appropriate partner, i. e. the webservice provider 7. The ability of a business process to choose among several webservice providers 7 gives the consumer 2 a chance to find an optimal trade-off between price and availability of offered quality of service.

With the computer system 1 as shown in figure 6B, it is possible to choose an appropriate service from a list of available partners. The consumer chooses via a service discovery mechanism provided by the UDDI repository 4.

In the embodiment as shown in figure 6C, the quality-of-service based service discovery is performed at run time. In the embodiment as shown in figure 6C, the computer architecture is extended by an UDDI proxy 11 which enables adaptivity of a business process and a dynamic invocation of webservices from different webservice providers 7. In this embodiment depending on a demand of the end user, the entire composition of services included into the business process can be changed during run time of the business process. The UDDI proxy server 11 gets the request from the BPEL engine 5 with a type of each service and interface specification. The UDDI proxy 11 gets services with corresponding characteristics. The UDDI proxy 11 then verifies the availability of each possible partner. The business process is bound to the appropriate services and will lead to optimal composition, subject to customer requirements. Furthermore, the UDDI proxy 11 continues to update these lists of available partners for the specific business process. This allows to adapt the business process during its execution in case of quality-of-service violation of some services.

The webservice providers 7 are chosen by the UDDI proxy 11 in order to optimise the business process according to user requirements. In case of violation of metrics promised by some webservice providers, the providers 7 are replaced at run time by another webservice provider providing a service of the same service class.

The BPEL engine 5 supports the embodiment as shown in figure 6C by dynamic rebinding of new partners at run time. Since the service discovery of the embodiment of figure 6C is carried out at run time, the costs and quality of all available services may be accessed each time the customer application of a client 2 is used.

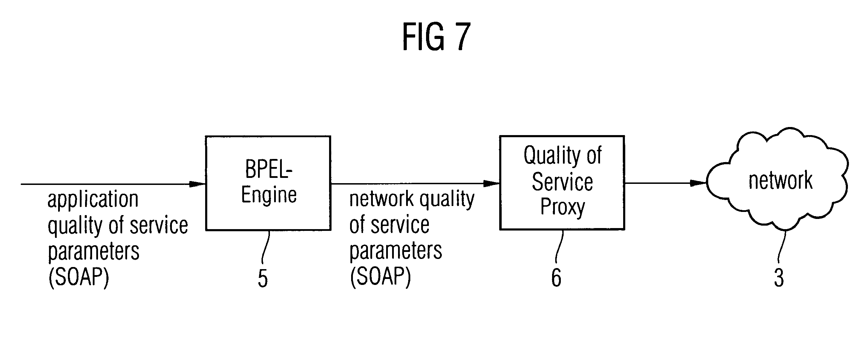

Figure 7 shows a block diagram illustrating an embodiment of a business process with an integrated network quality-of-service management according to the present invention.

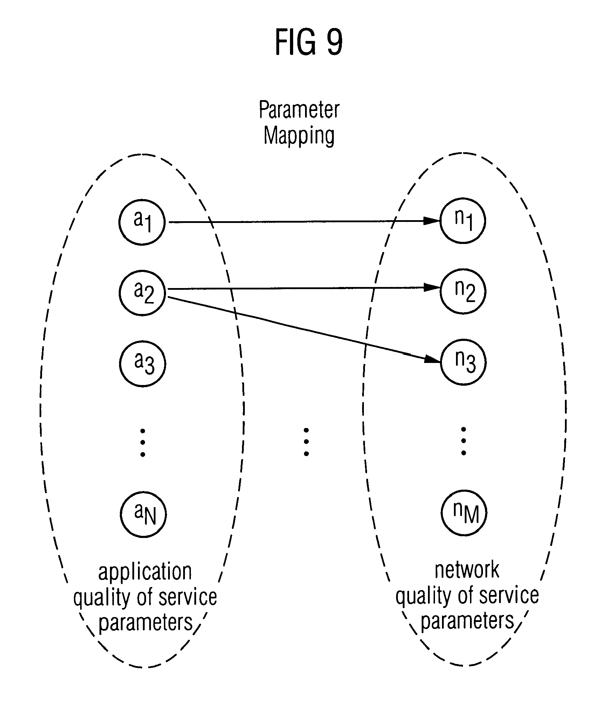

The BPEL engine 5 receives by means of a SOAP message some application quality-of-service parameters, such as transmission rate, delay time, delay jitter and error rate. The BPEL engine 5 comprises a mapping unit for mapping of the received application quality of service parameters to a network of quality-of-service parameters, such as illustrated in figure 9. An application quality of a service parameter is mapped to at least one network quality-of-service parameter. The mapped network quality-of-service parameters are then forwarded by the BPEL engine 5 to the quality-of-service proxy 6 which forms a part of the infrastructure of the network provider. Examples for network providers in Germany are, for instance, Arcor or Telekom. The quality-of-service proxy 6 performs a reservation of resources of the underlying network 3 of the network provider depending on the network quality of service parameters received from the BPEL engine 5, such as bandwidth, packet delay time, packet delay jitter and packet loss. The network quality-of-service parameters are forwarded by the BPEL engine in a SOAP message.

The BPEL engine 5 receives the application quality-of-service parameters in a SOAP (Simple Object Access Protocol) message. The application quality-of-service parameters are received in a preferred embodiment by at least one header of a SOAP message. In an alternative embodiment, the application quality-of-service parameters are received during a business process run on the BPEL engine 5 in a body of a SOAP message.

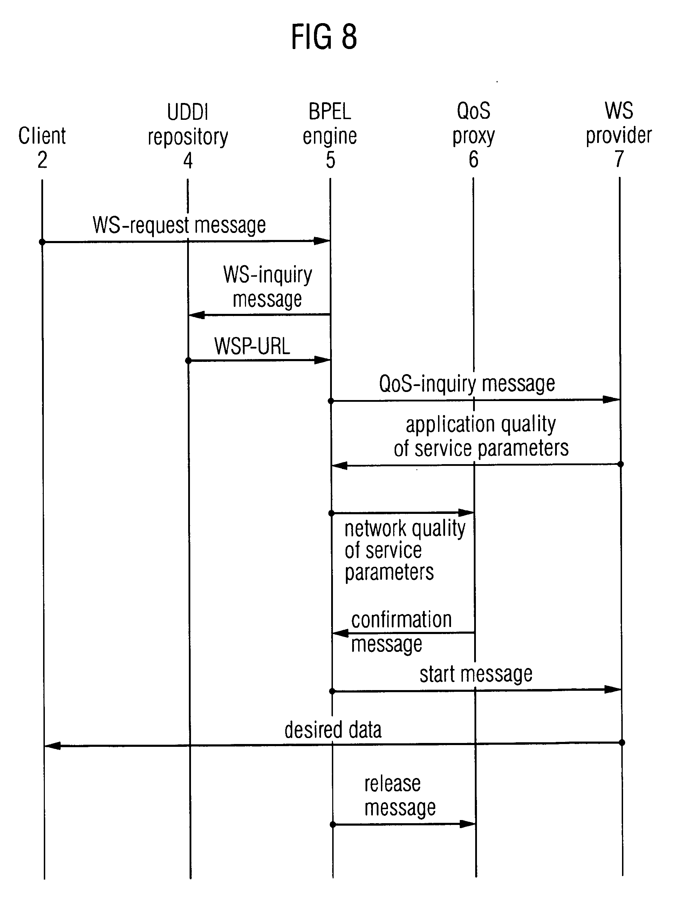

Figure 8 shows a signal diagram for illustrating an embodiment of the interaction between components of the computer system 1 according to the present invention. A client 2 first sends a request message indicating the desired data, such as multimedia data, to the BPEL engine 5. In response to the request message, the BPEL engine 5 sends an inquiry message to the UDDI repository to retrieve addresses or webservices providers 7 supplying the desired data. The UDDI repository 4 supplies the BPEL engine 5 with the requested addresses (URL) of webservice providers and the BPEL engine 5 sends upon reception of the addresses an inquiry message to the addresses of the retrieved webservice providers 7 to retrieve application quality-of-service parameters provided by these webservice providers. The BPEL engine 5 receives the application quality-of-service parameters in a SOAP message and maps the received application quality-of-service parameters to network quality-of-service parameters. In a further step, the network quality-of-service parameters are then forwarded by the BPEL engine 5 to the quality-of-service proxy 6 of a network service provider. The quality-of-service proxy 6 reserves resources of the network 3 automatically depending on the network quality-of-service parameters received from the BPEL engine 5 and sends after a successful reservation of the network resources a confirmation message to the BPEL engine 5. When the BPEL engine 5 receives the confirmation message from the quality-of-service proxy 6, he sends a start message to a webservice provider 7 to start data transmission to the requesting client 2, for instance, the webservice provider 7 is requested to start data transmission of the requested multimedia data content. The data desired by the client 2 is transmitted from the webservice provider 7 via the network 3 to the client. The BPEL engine 5 monitors all messages transmitted via the data network 3. As soon as the data transmission from the webservice provider 7 to the client 2 has ended for any reason, the BPEL engine 5 sends a release message to said quality-of-service proxy 6 to release the reserved network resources.

In the embodiment as shown in figure 8, the business process receives the application quality-of-service parameters from the webservice provider 7.

In an alternative embodiment, the BPEL engine 5 receives the application quality-of-service parameters from the UDDI repository 4. These application quality-of-service parameters are published by the webservice provider 7 in the UDDI repository 4.

In a further alternative embodiment, the BPEL engine running the business process receives the application quality-of-service parameters from the requesting client 2. In a possible embodiment, the client 2 sends with his request message indicating desired data, such as multimedia content data, further additional quality-of-service parameters to the BPEL engine 5. In a possible embodiment, the request message sent by the client 2 to the BPEL engine 5 further comprises price information data. The business process run by the engine 5 is a computer-implemented process and the quality-of-service proxy 6 reserves the resources of the network 3 automatically depending on the received network quality-of-service parameters.

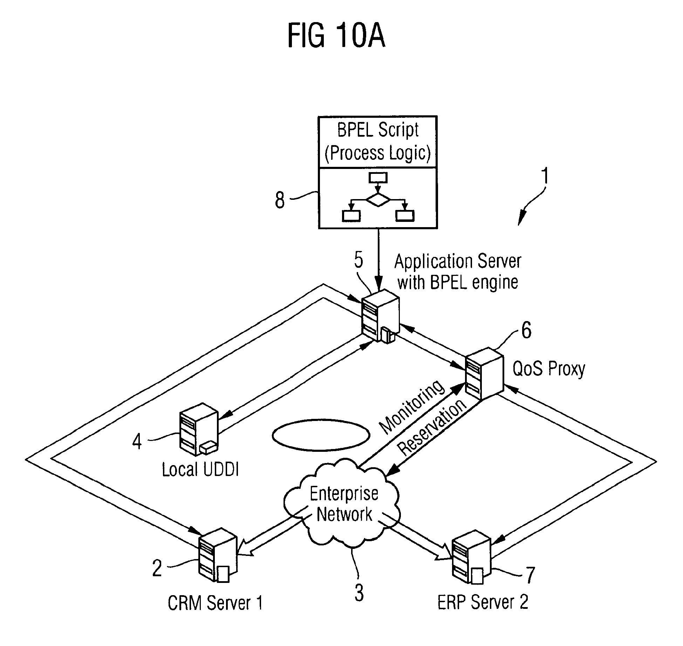

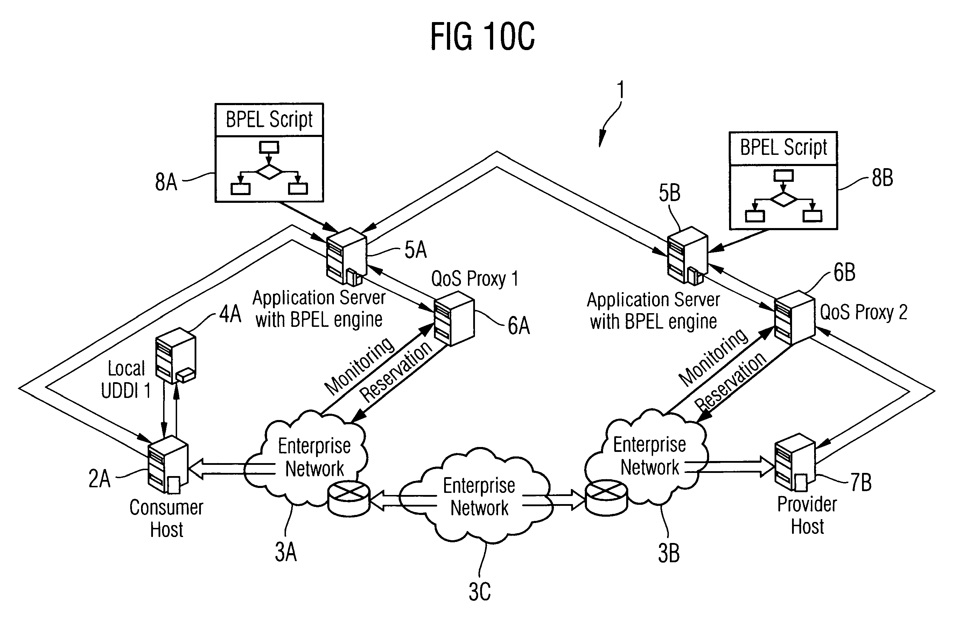

Figure 10A shows a first embodiment for a computer system 1 according to the present invention implementing a business process according to the present invention. The CRM forms a client 2 or a requestor for a webservice and the ERP forms a webservice provider 7. In the first step, the client 2 sends a request for the required webservice and application quality-of-service requirements to the BPEL engine 5. The quality-of-service requirements are either placed into the header of a SOAP message or into the body of the SOAP message. A BPEL engine 5 which plays the role of a webservice broker is forwarding the webservice request to a local UDDI server 4 which contains a description of all published webservices. The local UDDI server 4 is sending a response back to the BPEL engine 5 containing a list of links to WSDL files with a service description. The BPEL engine 5 verifies the availability of each webservice in the request for the corresponding WSDL file. All requests containing in a header the required quality-of-service parameters are sent through the quality-of-service proxy 6. The network 3 is monitored by the quality-of-service proxy 6 to get information about available resources of the network 3. Depending on the monitored availability of network resources, the quality-of-service proxy 6 allocates necessary network resources for requested network services. The quality-of-service proxy 6 chooses the best webservice concerning network quality-of-service and server load when more than one webservice with the required characteristics are available. The quality-of-service proxy 6 is responsible for making the decision which webservice should be invoked. An invoked webservice 7 sends a response to the BPEL engine 5 which is forwarding this response to the requesting client 2 to establish a connection between the requesting client 2 and the webservice provider 7.

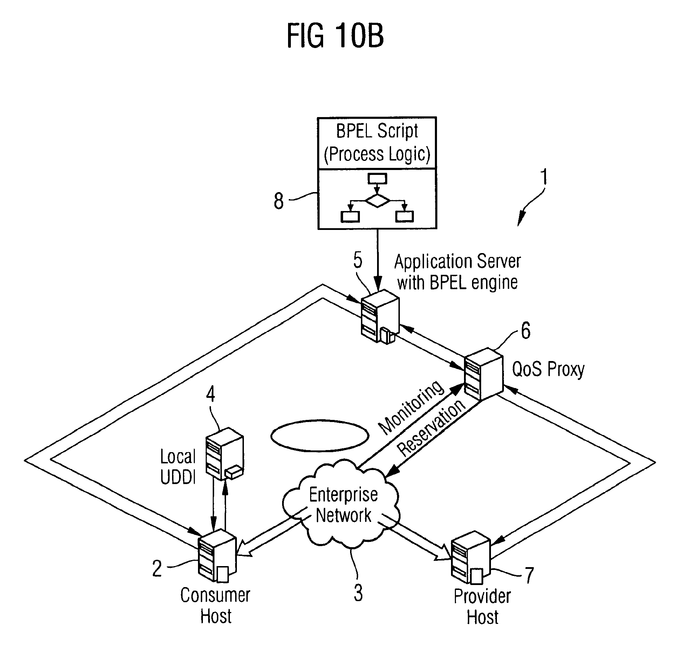

Figure 10B shows a further embodiment of the computer system 1 for implementing the business process with an integrated network quality-of-service management according to the present invention. In this embodiment, the client 2 browses through a local UDDI directory of a UDDI repository 4. In a response the client 2 gets a short description of the webservice and the address (URL) of the BPEL engine 5. The client 2 accesses a provider host or a webservice provider 7 not directly but through the BPEL engine 5. The BPEL engine 5 verifies the availability of necessary network resources by sending an inquiry to the quality-of-service proxy 6. As soon as the quality-of-service proxy 6 confirms the reservation of resources, an SOAP message will notify the webservice provider 7 to start the service execution with the parameters requested by the client 2. This message contains also the address of the client 2. Simultaneously with the start of the webservice, the webservice provider or provider host 7 sends a response to the BPEL engine 5 via the quality-of-service proxy 6. This comprises a confirmation of service availability. This message is then forwarded to the client 2 to inform the client 2 about the transport protocol used in service delivery. After having received this message, the client 2 will get the service supported by the network 3.

Figure 10C shows a further embodiment of the computer system 1 according to the present invention for implementing a business process with an integrated network quality-of-service management. In this embodiment, the computer system 1 is formed by a distributed enterprise architecture. With the computer system 1 as shown in figure 6C, the service requestor, i. e. the client 2a, and a service provider 7b are located in two different enterprise networks 3a, 3b which are geographically apart. These two networks 3a, 3b are connected through a dedicated link of a provider network 3c. In order to discover the desired webservice, the client 2a browses through the UDDI directory of the local UDDI repository 4a. According to the received URL, the client 2a requests a service through the BPEL engine 5a. As soon as the BPEL engine 5a receives confirmations about resource reservation, the webservice provider 7b is notified to start the service execution with parameters requested from the client 2.

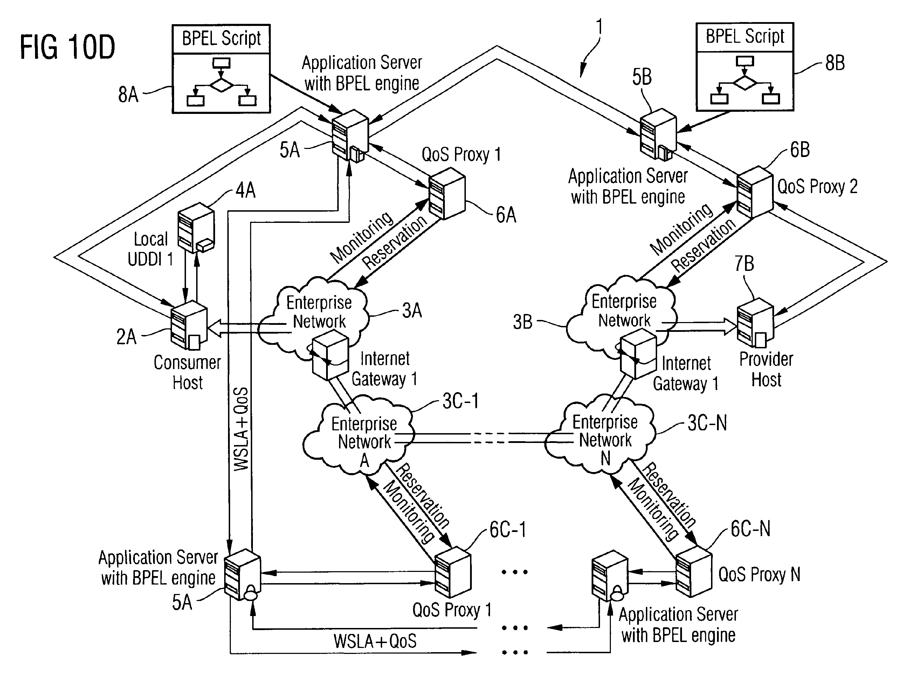

Figure 10D shows a further embodiment of the computer system 1 according to the present invention for implementing the business process with an integrated network quality-of-service management. In this most generic embodiment, the service requesting client 2a and the service providing host 7b are located in two different enterprise networks 3a, 3b that are geographically apart. The connection between the two networks 3a, 3b is done via the Internet, i. e. a chain of provider networks 3c-i. Network characteristics, such as bandwidth, delay, bit error rate etc. in this connection and price conditions are negotiated between enterprises and network providers.

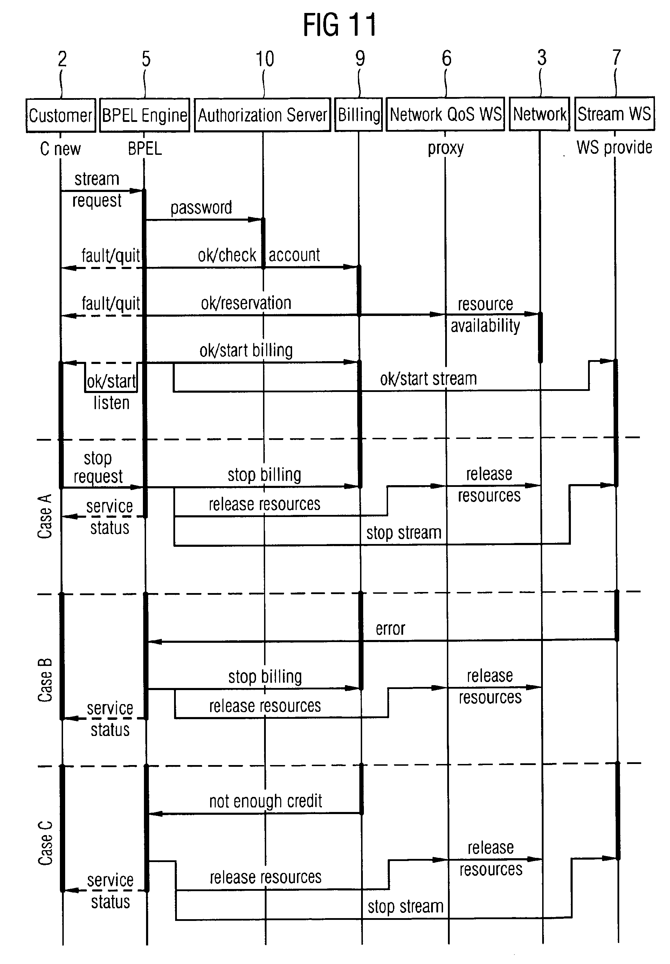

Figure 11 shows an example of an executable business process for multimedia streaming with guaranteed quality of service. In the given example, participants of the business process are a video stream webservice provider which offers delivering of a real time video content over a network 3. The billing webservice provider 9 performs the billing of the webservice using parameters, such as credit card number, credit card owner, credit card validity. An authorisation server 10 implements security functionalities of the business process, for example, authentification and verification of the user identity. The BPEL engine 5 implements the orchestration function, i. e. coordinate all participants of the business process according to the defined logic. A customer 2 receives a multimedia streaming service with guaranteed quality of service. Each customer 2 starts a business process by sending a request with necessary input parameters. As soon as the customer 2 intends to receive a multimedia content data stream from the webservice provider 7, the customer sends a request to the BPEL engine 5. The request contains all input parameters required by all participants of the process. The first activity of this process is the authorisation of the user or customer 2 by sending his user name and a password to the authorisation server 10. If for some reasons the negative response is received by the BPEL engine 5, the process is interrupted and an error message is sent back to the customer 2. Otherwise, the user's account validity and ability to accept the charge is verified by the billing webservice provider 9. The failure of verification leads to an interruption of the BPEL process and the customer 2 is notified accordingly. After verification, the network attempts to reserve the required resources by sending a request to the network quality-of-service proxy 6. The proxy 6 verifies whether the requested network resources are available. If the resources of the network are available, a reservation takes place. Unavailability of resources leads to process abortion and customer notification. As soon as the network proxy server 6 confirms network resource allocation, the BPEL engine 5 initiates simultaneously three activities, i. e. the billing server 9 starts a counter, the webservice provider 7 starts streaming of the requested data and the customer 2 starts to listen to the received data. At this stage of the process, all three invocation tasks are done asynchronously to avoid blocking of the business process until the moment when the BPEL engine 5 receives responses from one of the three partners. Three situations for each partner are possible. Case A shows a situation where a customer 2 makes a decision of stopping the webservice. Case B shows a situation where the server sends an error message. Case C shows an example where a credit on the customer's account is exceeded.

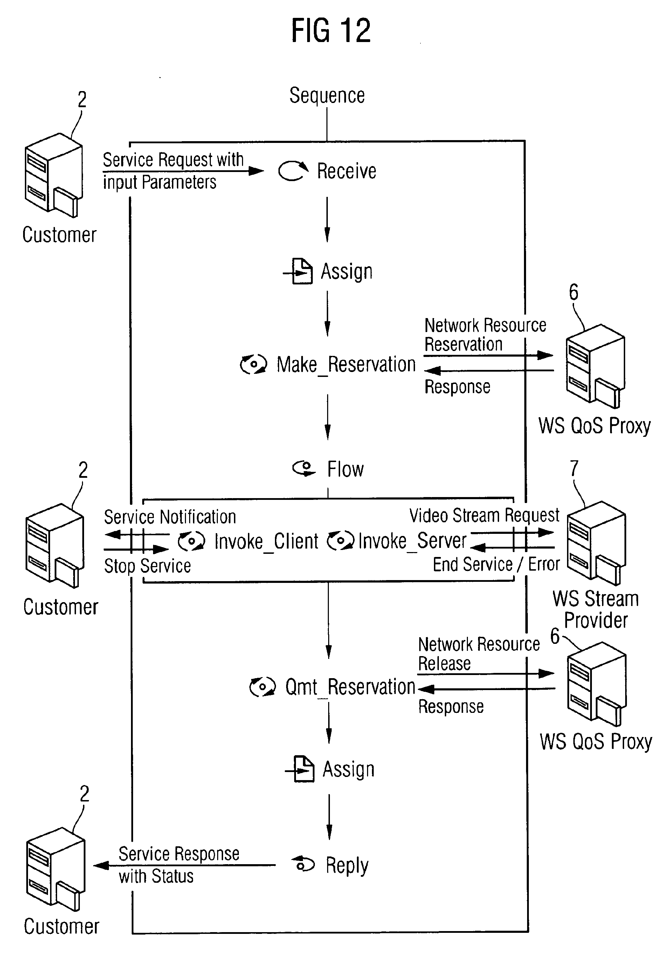

Figure 12 shows a graphical representation of a business process implemented by active web flow according to the present invention.

The invention allows dynamical and direct mapping of required application quality-of-service parameters onto underlying network quality-of-service parameters independently of the network quality-of-service message. With the present invention, the centralised management of network resources defined by logic of business process is possible. Furthermore, the method according to the present invention allows the integration of quality of services into a business process.

In the method according to the present invention, an universal quality-of-service semantic is used in one embodiment within the headers of SOAP messages which are used for communication between quality-of-service proxies 6 and BPEL engines 5. This semantic is transparent and understandable for any underlying network quality-of-service method, i. e. independent from the used network technology. As required by the BPEL engine 5, the application quality-of-service parameters can be placed in one embodiment into the SOAP message header according to a special XML scheme. The information about the requested quality of service can be retrieved from the SOAP header by the quality-of-service proxy 6 and the body of the SOAP message can be forwarded to the requested webservice provider 7. Through its network interface, a quality-of-service proxy 6 maps then the retrieved quality-of-service parameters onto the underlying network if the requested network resources are available. A denial of requested resource allocation can be attached as an extended header of a response SOAP message from the webservice provider 7.

Although modifications and changes may be suggested by those skilled in the art, it is the intention of the inventors to embody within the patent warranted hereon all changes and modifications as reasonably and properly come within the scope of their contribution to the art.

## Claims

1. A business process with an integrated network quality of service management,
wherein said business process maps application quality-of-service parameters to network quality-of-service parameters and forwards the network quality-of-service parameters to a quality-of-service proxy which reserves resources of a network depending on the network quality of service parameters.

2. The business process according to claim 1,
wherein said business process is performed by a BPEL (Business Process Execution Language) engine.

3. The business process according to claim 1,
wherein said business process receives the application quality-of-service parameters from a webservice provider.

4. The business process according to claim 1,
wherein said business process receives the application quality-of-service parameters from a client.

5. The business process according to claim 1,
wherein the business process receives the application quality-of-service parameters from a UDDI (Universal Description and Discovery Integration) repository.

6. The business process according to claim 1,
wherein the application quality-of-service parameters comprise a transmission rate, a delay time, a delay jitter and an error rate.

7. The business process according to claim 1,
wherein the network quality-of-service parameters comprise a bandwidth, a packet delay time, a packet delay jitter and a packet loss.

8. The business process according to claim 1,
wherein the application quality-of-service parameters are received by said business process in a SOAP (Simple Object Access Protocol) message.

9. The business process according to claim 8,
wherein the application quality-of-service parameters are received in a header of a SOAP-message.

10. The business process according to claim 8,
wherein the application quality-of-service parameters are received by said business process in a body of a SOAP-message.

11. The business process according to claim 2,
wherein the quality-of-service proxy after a successful reservation of the network resources transmits a confirmation message to the BPEL engine, on which said business process is performed.

12. The business process according to claim 11,
wherein the BPEL engine transmits upon reception of the confirmation message from the quality-of-service proxy a start message to a webservice provider to start data transmission to a client.

13. The business process according to claim 2,
wherein the quality-of-service proxy notifies the BPEL engine when the available network resources are not sufficient for performing the reservation of network resources.

14. The business process according to claim 1,
wherein the business process is a computer implemented process.

15. The business process according to claim 1,
wherein the quality-of-service proxy reserves the resources of the network automatically depending on the network quality-of-service parameters.

16. The business process according to claim 2,
wherein a client sends a request message indicating desired data to the BPEL engine.

17. The business process according to claim 16,
wherein the BPEL engine sends an inquiry message to an UDDI repository to retrieve addresses of webservice providers supplying the desired data.

18. The business process according to claim 17,
wherein the BPEL engine sends an inquiry message to the addresses of the retrieved webservice providers to retrieve application quality-of-service parameters provided by said webservice providers.

19. The business process according to claim 16,
wherein the client sends with its request message indicating desired data additional quality-of-service parameters to the BPEL engine.

20. The business process according to claim 19,
wherein the request message sent by the client to the BPEL engine further comprises price information data.

21. The business process according to claim 1,
wherein the application quality-of-service parameters are published by a webservice provider in a UDDI repository.

22. The business process according to claim 12,
wherein the webservice provider transmits multimedia data to a requesting client after reception of a start message from the BPEL engine via the network.

23. The business process according to claim 22,
wherein the BPEL engine monitors all messages transmitted via the network.

24. The business process according to claim 23,
wherein the BPEL engine sends a release message to release the reserved network resources to the quality-of-service proxy when data transmission from the webservice provider to the client is ended.

25. A data storage medium which stores a program code for performing the business process according to claims 1 to 24.

26. A quality-of-service proxy comprising
(a) a webservice interface for receiving network quality-of-service parameters from a BPEL (Business Process Execution Language) engine; and
(b) a network interface for reserving resources of a network depending on the received network quality of service parameters.

27. A BPEL (Business Process Execution Language) engine running a business process with an integrated network quality-of-service management,
wherein the BPEL engine receives application quality-of-service parameters which are mapped to network quality-of-service parameters by a mapping unit of said BPEL engine, and
wherein the network quality-of-service parameters are forwarded by said BPEL engine to a quality-of-service proxy of a network service provider.

28. A computer system comprising:
(a) a plurality of clients connected to a network;
(b) at least one UDDI repository connected to said network;
(c) at least one BPEL engine connected to said network;
(d) at least one quality of service proxy connected to said network;
(e) at least one webservice provider connected to said network;
(f) wherein the BPEL engine maps application quality-of-service parameters to network quality-of-service parameters and forwards these network quality-of-service parameters to said quality-of-service proxy which performs an automatic reservation of resources of said network depending on the forwarded network quality-of-service parameters.
